# EUROPÄISCHE PATENTSCHRIFT

(11) **EP 3 930 963 B1**
(45) Veröffentlichungstag und Bekanntmachung des Hinweises auf die Patenterteilung: **22.02.2023**
(21) Anmeldenummer: 20704459.5
(22) Anmeldetag: 04.02.2020
(51) Int. Cl.: B25J 5/00, B25J 19/06, B25J 19/02, B25J 13/08, G01S 13/931, G05D 1/02, G01S 15/931, G01S 17/931

(54) **AUTONOMES FAHRZEUG MIT EINER SENSOREINRICHTUNG**
AUTONOMOUS VEHICLE COMPRISING A SENSOR DEVICE
VÉHICULE AUTONOME COMPORTANT UN DISPOSITIF CAPTEUR

(30) Priorität: 25.02.2019 DE 102019202511
(43) Veröffentlichungstag der Anmeldung: 05.01.2022
(73) Patentinhaber: KUKA Deutschland GmbH, 86165 Augsburg (DE)
(72) Erfinder: SCHULTE-REBBELMUND, Till, 86152 Augsburg (DE); WUENSCH, Markus, 86153 Augsburg (DE)
(74) Vertreter: Oelke, Jochen
(86) Internationale Anmeldenummer: PCT/EP2020/052715
(87) Internationale Veröffentlichungsnummer: WO 2020/173673

(56) Entgegenhaltungen:
- JP-A- H08 166 822
- JP-A- H09 150 690
- JP-A- H09 300 252
- JP-A- 2000 263 489

## Beschreibung

Die Erfindung betrifft ein autonomes Fahrzeug, aufweisend einen Fahrzeugkörper mit einer Aufnahmeeinrichtung, die ausgebildet ist, ein Transportgestell auf dem Fahrzeugkörper aufzunehmen, ein Fahrwerk mit wenigstens einem angetriebenen Rad und mindestens einer Sensoreinrichtung, welche einen das autonome Fahrzeug umschließenden Erfassungsbereich aufweist zur Erkennung von Hindernissen, die in der unmittelbaren Umgebung des autonomen Fahrzeuges in den Erfassungsbereich der Sensoreinrichtung eintreten.

Aus der WO 02/45914 ist ein Robotersystem, umfassend einen autonom mobilen Roboter bekannt, welcher Räder, einen Steuercomputer und Sensoren aufweist, welche zur Navigation und zur Kommunikation genutzt werden.

Aus der JP H09 150690 A ist ein System zur Kollisionsdetektion eines sich bewegenden Fahrzeugs bekannt, bei dem ein Draht zur Kollisionsdetektion auf elastische Rollen um das Fahrzeug gewickelt ist.

Aus der JP 2000 263489 A ist ein mobilen Roboter bekannt der einen Sensor zur Hinderniserkennung aufweist, um ein Hindernis in Reichweite eines Roboterarms zu erkennen und der dazu eingerichtet ist diese Information an weitere Roboter in der Näher zu kommunizieren.

Die JP H08 166822 A und JP H09 300252 A lehren ebenfalls mobile Roboter die zur Objekterkennung kontaktlose Sensoren, z.B. Infrarotsensoren aufweisen.

Aufgabe der Erfindung ist es, ein autonomes Fahrzeug zu schaffen, das Hindernisse mittels einer Sensoreinrichtung zuverlässig zu erkennen vermag, und zwar auch dann, wenn das autonome Fahrzeug ein Transportobjekt, insbesondere ein Transportgestell aufgenommen hat, das zumindest teilweise in den Erfassungsbereich der Sensoreinrichtung hineinragt. Insbesondere soll dies auch für omnidirektional bewegliche Fahrzeuge möglich werden.

Die Aufgabe wird erfindungsgemäß gelöst durch ein autonomes Fahrzeug, aufweisend einen Fahrzeugkörper mit einer Aufnahmeeinrichtung, die ausgebildet ist, ein Transportobjekt, insbesondere ein Transportgestell auf dem Fahrzeugkörper aufzunehmen, ein Fahrwerk mit wenigstens einem angetriebenen Rad und mindestens einer Sensoreinrichtung, welche einen den Fahrzeugkörper umschließenden Erfassungsbereich aufweist zur Erkennung von Hindernissen, die in der unmittelbaren Umgebung des autonomen Fahrzeuges in den Erfassungsbereich der Sensoreinrichtung eintreten, wobei das Fahrzeug eine Gelenkanordnung aufweist, welche ausgebildet ist, die Sensoreinrichtung in Bezug zum Fahrzeugkörper zu verstellen, derart, dass die Sensoreinrichtung wahlweise
- in einer die Grundumfangskontur des Fahrzeugkörpers überwachenden ersten Anordnung betreibbar ist und
- in wenigstens einer eine Gesamtumfangskontur bestehend aus der Grundumfangskontur und einer sich bei aufgenommenem Transportobjekt, insbesondere aufgenommenem Transportgestell ergebenden Erweiterungskontur des autonomen Fahrzeugs überwachenden zweiten Anordnung betreibbar ist,
in welcher zweiten Anordnung die Sensoreinrichtung gegenüber der ersten Anordnung so umpositioniert ist, dass ein von dem autonomen Fahrzeug aufgenommenes Transportobjekt, insbesondere Transportgestell von dem die Gesamtumfangskontur in der zweiten Anordnung vollständig umschließenden, nach außen detektierenden Erfassungsbereich der Sensoreinrichtung eingeschlossen ist.

Mittels der Erfindung können autonome Fahrzeuge, insbesondere solche mit omnidirektionalen Bewegungsmöglichkeiten vor Kollisionen mit Hindernissen geschützt werden, selbst wenn sie sperrige und/oder ausladende Transportgestelle und/oder Transportobjekt aufgenommen haben. Das autonome Fahrzeug kann selbstständig einen vorprogrammierten oder durch eigene Navigation und/oder Berechnung erzeugten Pfad zurücklegen. Dies kann insbesondere für die Nutzung in Fabrikhallen und/oder Supermärkten vorgesehen sein. Das autonome Fahrzeug weist einen Fahrzeugkörper mit einer Aufnahmeeinrichtung auf, die zur Aufnahme eines Transportgestells und/oder eines Transportobjekts ausgebildet ist. Der Fahrzeugkörper weist eine Grundkontur auf, welche der Grundfläche des autonomen Fahrzeuges entsprechen kann.

Im Folgenden wird die Erfindung anhand eines Transportgestells, das eine spezielle Art eines erfindungsgemäßen Transportobjektes darstellt, näher erläutert. Das speziell zum Transportgestell Erwähnte, kann je nach Art und Ausgestaltung eines anderen Transportobjekts auch für ein solches anderes Transportobjekt gelten. Das Transportgestell kann beispielsweise einen Behälter für Stückgut aufweisen und ist auf dem autonomen Fahrzeug aufsetzbar. Das Transportgestell kann die Größe der Grundkontur des Fahrzeugkörpers verändern d.h. erweitern, sodass eine Gesamtkontur entsteht, welche größer sein kann als die Grundkontur des autonomen Fahrzeuges. Das kann beispielsweise dann der Fall sein, wenn das Transportgestell Standbeine aufweist, welche es dem autonomen Fahrzeug erlauben, das Transportgestell zum Aufnehmen zu unterfahren. Transportgestelle mit Standbeinen können autonome Fahrzeuge mit feststehenden Sensoreinrichtungen in der Nutzung einschränken, beispielsweise dadurch, dass feststehende Sensoren des autonomen Fahrzeugs, die den Fahrweg des autonomen Fahrzeugs auf Hindernisse überwachen sollen, die Standbeine des aufgenommenen Transportgestelles fälschlicherweise als Hindernis erkennen. Dieses Fehlverhalten der Sensoren soll erfindungsgemäß auf einfache Weise verhindert werden. Auch passive Schutzeinrichtungen, die vor allem zur Aufnahme von Kollisionsenergie dienen, können durch das Transportgestell und/oder Transportobjekt in ihrem Nutzen eingeschränkt sein, beispielsweise dadurch, dass eine Kollision zuerst mit dem Transportgestell und/oder Transportobjekt erfolgen würde und somit eine Energieaufnahme durch die passive Schutzeinrichtung verhindert wäre. Dies kann erfindungsgemäß ebenso umgangen werden.

Das Transportgestell kann beispielsweise eine Fläche aufweisen, auf welcher Gegenstände, wie beispielsweise Gebinde aufgestellt und durch das autonome Fahrzeug transportiert werden können.

Das autonome Fahrzeug weist ein Fahrwerk auf, welches wenigstens ein angetriebenes Rad aufweist, welches ausgebildet ist das autonome Fahrzeug anzutreiben und zu steuern. Das autonome Fahrzeug kann demgemäß auch zwei oder mehr Räder aufweisen, welche jeweils angetrieben und/oder lenkbar sein können. Insbesondere kann das autonome Fahrzeug vier Räder aufweisen, welche jeweils angetrieben und/oder lenkbar sein können und/oder durch ihre besondere Beschaffenheit eine omnidirektionale Bewegung ermöglichen, insbesondere durch den als Mecanumrad bekannten Aufbau.

Das autonome Fahrzeug weist mindestens eine Sensoreinrichtung auf, welche zur Erkennung von Hindernissen in der unmittelbaren Umgebung des Fahrzeuges ausgebildet ist. Hindernisse können bewegliche oder stationäre Vorrichtungen und/oder Personen in Fabrikhallen und/oder Supermärkten sein, welche sich im Fahrweg des autonomen Fahrzeuges befinden und/oder den Fahrweg des autonomen Fahrzeuges kreuzen. Die mindestens eine Sensoreinrichtung erfasst die Hindernisse in der Umgebung des Fahrzeuges, insbesondere durch Kontakt-Sensoren oder durch berührungslos arbeitende Sensoren, welche mindestens an einer Fahrzeugseite angeordnet sind. Die Sensoreinrichtungen können an allen Fahrzeugseiten angeordnet sein. Zusätzlich oder ersetzend kann mindestens ein passives Schutzelement zur Aufnahme von Kollisionsenergie an der Fahrzeugaußenkontur angebracht sein. Die passiven Schutzelemente können an allen Fahrzeugseiten angeordnet sein.

In allen erfindungsgemäßen Ausführungsvarianten kann die Sensoreinrichtungen bereits durch eine einfache, passive Schutzeinrichtung gebildet werden. Die passive Schutzeinrichtung kann beispielsweise von elastischen Stoßmitteln, analog von Stoßstangen gebildet werden, welche sich bei einer Kollision mit einem Gegenstand vorübergehend verformen, um die Stoßenergie der Kollision abzubauen und die nach Trennung von dem Kollisionsobjekt vorzugsweise sich wieder in ihre ursprüngliche Gestalt zurückbilden. Insoweit sind auch solche passive Schutzeinrichtungen, d.h. elastische Stoßmittel ausgebildet, einen das autonome Fahrzeug umschließenden Erfassungsbereich zu bilden, zur Erkennung von Hindernissen, die in der unmittelbaren Umgebung des autonomen Fahrzeuges in den Erfassungsbereich der passiven Schutzeinrichtung, d.h. der elastischen Stoßmittel eintreten.

Das autonome Fahrzeug weist erfindungsgemäß eine Gelenkanordnung auf, welche ausgebildet ist die Sensoreinrichtung und/oder passive Schutzeinrichtung zu verstellen. Die Gelenkanordnung kann mindestens zwei Positionen einnehmen. Die Gelenkanordnung ermöglicht es insoweit, dass die Sensoreinrichtung und/oder passive Schutzeinrichtung wahlweise so ausgerichtet werden kann, dass entweder lediglich die Grundumfangskontur des autonomen Fahrzeugs vor Kollisionen geschützt wird oder auch die Gesamtumfangskontur vor Kollisionen geschützt ist, die sich ergibt, wenn das autonome Fahrzeug mittels seiner Aufnahmeeinrichtung das Transportgestell und/oder Transportobjekt aufgenommen hat.

Die Sensoreinrichtung und/oder passive Schutzeinrichtung kann demgemäß an wenigstens einem Gelenkteil oder Gelenkarm angeordnet sein, derart, dass die Sensoreinrichtung und/oder passiven Schutzeinrichtung mithilfe des Gelenkteils oder Gelenkarms oder der Gelenkteile oder Gelenkarme neu ausgerichtet werden kann. Durch eine andere Ausrichtung ist es beispielsweise der Sensoreinrichtung und/oder passive Schutzeinrichtung dann beispielsweise möglich, an den Standbeinen eines auf das Fahrzeug aufgebrachten Transportgestells vorbei positioniert zu werden, wodurch die Sensoreinrichtung und/oder Schutzeinrichtung dann auch das Transportgestell als Teil des autonomen Fahrzeugs vor Hindernissen schützt und das Transportgestell nicht fälschlicherweise als ein fremdes Hindernis wahrnimmt bzw. diese zuerst mir eine Hindernis in Berührung kommt.

In der ersten Anordnung ist die Gelenkanordnung derart ausgerichtet, dass die Grundumfangskontur des autonomen Fahrzeuges alleine, also ohne einem aufgenommenen Transportgestell, vor Kollisionen geschützt ist.

In mindestens einer zweiten Anordnung ist die Gelenkanordnung derart positioniert, dass die Gesamtumfangskontur bestehend aus dem autonomen Fahrzeug und einem aufgenommenen Transportgestell, vor Kollisionen geschützt ist. In der zweiten Anordnung kann die Gelenkanordnung, insbesondere so positioniert werden, dass die Sensoreinrichtung und/oder passive Schutzeinrichtung die Gesamtumfangskontur, beispielsweise auch die Standbeinen eines Transportgestells vor Kollisionen schützt. Die Sensoreinrichtung und/oder passive Schutzeinrichtung kann mithilfe der Gelenkanordnung insoweit um das Transportgestell herum bewegt und außerhalb der Gesamtumfangskontur positioniert werden.

Die Gelenkanordnung kann wenigstens zwei Glieder und wenigstens ein Gelenk aufweisen, wobei ein erstes Glied mit dem Fahrzeug verbunden ist, ein zweites Glied die Sensoreinrichtung und/oder passive Schutzeinrichtung aufweist und das Gelenk das erste Glied mit dem zweiten Glied verstellbar verbindet. Das mit dem autonomen Fahrzeug verbundene erste Glied kann Teil des Fahrzeugkörpers sein, mit diesem verbunden sein und/oder einteilig mit diesem ausgebildet sein.

Mithilfe der Gelenkanordnung kann die Sensoreinrichtung und/oder passive Schutzeinrichtung umpositioniert werden, derart, dass wahlweise die Grundumfangskontur des autonomen Fahrzeugs alleine oder die Gesamtumfangskontur von autonomen Fahrzeug und aufgenommenem Transportgestell vor Kollisionen mit Hindernissen geschützt werden kann, ohne dass das Transportgestell fälschlicherweise als ein Hindernis erkannt wird. Die Gelenkanordnung weist beispielsweise zwei Glieder und ein Gelenk auf, welche ein Umpositionieren der Sensoreinrichtung und/oder passive Schutzeinrichtung ermöglicht.

Die Gelenkanordnung kann Motoren aufweisen, welche eine Änderung der Position der Sensoreinrichtung und/oder passiven Schutzeinrichtung durch Anpassung beispielsweise eines Stellwinkels und/oder Ausfahrposition des jeweiligen Gelenks realisieren. Durch die Motoren ist es möglich die Gelenkanordnung in die gewünschte erste Anordnung oder zweite Anordnung der Sensoreinrichtung und/oder passiven Schutzeinrichtung zu bewegen.

Die Motoren können beispielsweise als Gleichstrom oder Wechselstrommotoren, sowie als Drehstrommotoren ausgebildet sein, beispielsweise auch als Servomotoren und oder Schrittmotoren. Zwischen Motoren und Gelenkanordnung könnten hydraulische und/oder mechanische Übertragungselemente und/oder Verzweigungselemente geschaltet sein.

Das autonome Fahrzeug kann eine Auswertevorrichtung aufweisen, welche ausgebildet ist, Signale der Sensoreinrichtung auszuwerten, derart, dass ein Eindringen eines Hindernisses in den das autonome Fahrzeug und das aufgenommene Transportgestell und/oder Transportobjekt umschließenden Erfassungsbereichs während einer Fahrt des autonomen Fahrzeugs erkannt wird. Unter einem Eindringen eines Hindernisses in den das autonome Fahrzeug und das aufgenommene Transportgestell umschließenden Erfassungsbereich wird insbesondere verstanden, dass ein Hindernis dem autonomen Fahrzeug zusammen mit dem aufgenommenen Transportgestell so nahe kommt, dass die Sensoreinrichtung mit dem Hindernis kollidiert oder das Hindernis zumindest in den Erfassungsbereich der Sensoreinrichtung gerät. Dabei ist insbesondere möglich, dass das Hindernis sich auf das autonome Fahrzeug zu bewegt und/oder in die Fahrbahn des autonomen Fahrzeugs bewegt und/oder das autonome Fahrzeug sich auf das Hindernis zubewegt. Das Hindernis kann dabei auch eine oder mehrere Personen sein.

Die Sensoreinrichtung kann ausgebildet sein, Signale zu erzeugen, welche einen Kontakt mit einem Hindernis der Sensoreinrichtung oder ein Eindringen des Hindernisses in den Erfassungsbereich der Sensoreinrichtung anzeigen. Die Signale können insbesondere die Änderung einer Zugkraft an einem Zugmittel, die Änderung der ausgezogenen Länge eines Zugmittels, die Änderung einer Druckkraft an Außenoberflächen von Kontaktkörpern der Sensoreinrichtung, die Änderung der Gesamtkapazität eines kapazitiven Sensors, die Laufzeitmessung eines Ultraschallsignals oder Lichtsignals, die Änderung einer Lichtintensivität, die Druckänderung in einem geschlossenen Luftvolumen, die Änderung eines projizierten Musters aus Licht, die Änderung von Bilddaten, die Auswertung einer Radareinheit, die Spannungsänderung an Teilen der Gelenkanordnung, eine Positionsänderung der Gelenkanordnung oder eine Unterbrechung eines Lichtstrahls beispielsweise einer Lichtschranke der Sensoreinrichtung anzeigen. Bei passiven Schutzvorrichtungen könnte eine Änderung des Motorstroms am Antrieb auf eine Kollision hinweisen. Die Erzeugung eines elektrischen Signals kann insbesondere durch Betätigen beispielsweise eines Mikroschalters, der durch das Zugmittel oder den Kontaktkörper betätigt wird, oder durch Unterbrechen eines Lichtstrahles durch das Hindernis erfolgen.

Das autonome Fahrzeug kann eine Auswertevorrichtung aufweisen, welche die Signale der Sensoreinrichtung auswertet. Die Auswertevorrichtung kann die Signale in elektrische Signale umwandeln. Die Umwandlung ermöglicht die Weitergabe der Signale beispielsweise an eine Steuereinheit des autonomen Fahrzeuges.

Die Sensoreinheit kann demgemäß eine elektrische oder elektronische Verbindung, wahlweise eine kabelgebundene oder eine drahtlose Verbindung zur Auswertevorrichtung aufweisen, welche die Signale der Sensoreinheit auf die Auswertevorrichtung und/oder die Steuereinheit überträgt.

Die Sensoreinrichtung kann ausgebildet sein und die Auswertevorrichtung kann dabei eingerichtet sein, eine durch die Sensoreinrichtung aufgespannte, um das autonome Fahrzeug und das aufgenommene Transportgestell umlaufende Umfangsgrenzlinie und/oder einen umgebenden Umfangsfeldbereich auf Eindringen eines Hindernisses zu überwachen.

Das autonome Fahrzeug kann eine Steuereinheit aufweisen, welche eingerichtet ist, das wenigstens eine angetriebene Rad in Abhängigkeit des Eindringens eines Hindernisses in den Erfassungsbereich der Sensoreinrichtung anzusteuern.

Die Steuereinheit des autonomen Fahrzeuges plant entweder den Fahrweg des autonomen Fahrzeuges und befährt diesen selbständig, d.h. fahrerlos oder befährt einen vorgeplanten Weg selbständig, d.h. fahrerlos. Die Steuereinheit kann dabei beispielsweise auf Daten und/oder Signale der Auswertevorrichtung zugreifen, welche Daten und/oder Signale das Eindringen eines Hindernisses kennzeichnen und mittels der Sensoreinrichtung erfasst werden. Die Steuereinheit des autonomen Fahrzeuges kann dann den Fahrweg entsprechend anpassen, beispielsweise ein Ausweichmanöver einleiten oder das autonome Fahrzeug anhalten. Die Steuereinheit kann eine Verbindungsschnittstelle zu einem externen Computersystem aufweisen. Die Verbindungsschnittstelle kann zur Übermittlung von vorgeplanten Wegen verwendet werden und kann zur Planung des Transports von Gegenständen mittels des Transportgestells genutzt werden. Die Steuereinheit kann insbesondere als Mikrocontroller ausgebildet sein.

In einer ersten generellen Ausführungsvariante kann die Sensoreinrichtung als mindestens ein um das autonome Fahrzeug und/oder das aufgenommene Transportgestell umlaufender Kontakt-Sensor ausgebildet sein.

Unter einem Kontakt-Sensor wird im Allgemeinen jeglicher Sensor verstanden, der einen befürchteten, bevorstehenden und/oder erfolgten Kontakt des autonomen Fahrzeugs, insbesondere dessen Sensoreinrichtung mit einem Objekt der Umgebung, das auch als Kollisionsobjekt bezeichnet werden kann, feststellen, d.h. detektieren kann. Der Kontakt-Sensor kann insoweit berührungsfrei oder berührend arbeiten. Im einfachsten Fall ist der Kontaktsensor ein mechanischer Kontaktsensor, der eine Schaltleiste aufweist, die schaltet, wenn die Schaltleiste durch das Kollisionsobjekt berührt und/oder bewegt wird. Die Schaltleiste kann insoweit einen mechanischen Kontaktkörper und einen damit mechanisch gekoppelten elektrischen Schalter aufweisen, der schaltet, wenn der Kontaktkörper durch das Kollisionsobjekt bewegt wird. Die Bewegungen der Schaltleisten können beispielsweise durch Spannungssensoren im Halter oder in Aufhängungen oder Schienen der Sensoreinrichtung erfasst werden. Positionsänderungen des Halters oder der Aufhängungen oder der Schienen können beispielsweise mittels Potentiometer elektro-mechanisch erfasst werden.

Statt einer Schaltleiste kann der Kontakt-Sensor auch eine taktile Haut aufweisen, die auf Berührung reagiert. Der Kontakt-Sensor kann insoweit wenigstens einen kapazitiven Sensor aufweisen, der bei Berührung ein Schaltsignal erzeugt. Die taktile Haut kann aber auch ein Luftkissen umfassen, an das ein Drucksensor angekoppelt ist. Bei Berührung des Luftkissens steigt der Druck im Inneren des Liftkissens an, wobei durch den Drucksensor ein entsprechende Druckanstieg oder Druckabfall erfasst werden kann.

In der Ausgestaltung als ein berührungsloser Kontaktsensor kann dieser ein oder mehrere Ultraschallsensoren aufweisen, die ihre nähere Umgebung durch ausgesandte Ultraschallwellen und aufgenommene Reflektionen dieser Ultraschallwellen von annähernden Objekten diese Annährung erfassen können. Statt Ultraschallsensoren können auch Radarsensoren verwendet werden, die insoweit in einem anderen Frequenzbereich arbeiten.

In der Ausgestaltung als ein berührungsloser Kontaktsensor kann dieser auch optische Erfassungsmittel, wie Kameras für Momentaufnahmen oder Videoaufzeichnungen, aufweisen.

Der berührungslose Kontaktsensor kann auch wenigstens einen Lasersensor bzw. Laserscanner umfassen.

Der Kontakt-Sensor kann ausgebildet sein, Hindernisse in der unmittelbaren Umgebung des autonomen Fahrzeuges und/oder des aufgenommenen Transportgestells mittels mechanischer, insbesondere elektromechanischer Mittel zu detektieren. Eine Annäherung des autonomen Fahrzeuges an ein Hindernis kann beispielsweise einen mechanisch zu betätigenden elektrischen Kontakt auszulösen, derart, dass ein elektrisches Signal erzeugt wird und die Auswertevorrichtung dabei ausgebildet ist, das elektrische Signal aufzunehmen und auszuwerten.

Die Sensoreinrichtung kann wenigstens einen starren Kontaktkörper aufweisen, welcher eine Außenoberfläche umfasst, die zum berührenden Detektieren von Hindernissen im Fahrweg des autonomen Fahrzeugs ausgebildet ist. Die Gelenkanordnung kann ausgebildet sein, ausgehend von der ersten Anordnung den wenigstens einen starren Kontaktkörper in die zweite Anordnung zu bewegen, indem die Gelenkanordnung den wenigstens einen starren Kontaktkörper zwischen zwei benachbarten Standbeinen des von dem autonomen Fahrzeug aufgenommenen Transportgestells nach außen hindurchbewegt.

In der zweiten Anordnung der starren Kontaktkörper können diese auf Stirnstoß oder überlappend aneinander angeordnet werden, so dass eine geschlossene Kontur entsteht. Dazu können Kanten der starren Kontaktkörper mit weiteren Sensoren versehen sein, die ausgebildet sind, einen Stirnstoß oder eine überlappende Anordnung zweiter benachbarter Kontaktkörper erfassen zu können. Die weiteren Sensoren bildet insoweit eine Endpositionserkennung für die starren Kontaktkörper in der zweiten Anordnung. Die weiteren Sensoren können nach einer oder mehrerer der Sensorarten, wie zu den Kontaktsensoren beschrieben, aufweisen. Insoweit können die weiteren Sensoren auch wahlweise berührend oder berührungslos arbeiten.

Daneben kann die erste Anordnung und/oder die zweite Anordnung der starren Kontaktkörper durch separate elektromechanische Schalter, gegenseitige elektrische Kontaktierungen benachbarter Kontaktkörper und/oder durch optische Sensoren erfasst bzw. bestimmt werden. Auch kann die Gelenkstellung der Gelenkanordnung mittels Gelenksensoren erfasst werden, wie beispielsweise Drehgeber, Rotationspositionssensoren und/oder Linearpositionssensoren.

Die jeweilige Gelenkanordnung kann mittels Hebel, Bowdenzug, hydraulisch, pneumatisch und/oder elektromotorisch bewegt werden. Die Gelenkanordnung kann linear verstellend wirken, auf einer Kreisbahn bewegend arbeiten oder einer beliebigen anderen Bahn verstellend ausgeführt sein.

Der starre Kontaktkörper kann ausgebildet sein, bei berührendem Kontakt mit einem Hindernis einen Schalter zu betätigen, der ein elektrisches Signal erzeugt. Es können mehrere starre Kontaktkörper vorgesehen sein, insbesondere teilweise überlappend um das autonome Fahrzeug vollständig umlaufend bzw. um die Gesamtumfangskontur vollständig umlaufend. Die mehreren starren Kontaktkörper können beispielsweise derart überlappend angeordnet sein, dass bei einem Umpositionieren der starren Kontaktkörper mittels der Gelenkanordnung eine aneinanderreihende Verbindung der überlappend angeordneten Außenoberflächen der mehreren starren Kontaktkörper erzeugt wird. Die überlappende Aneinanderreihung ermöglicht insbesondere den Schutzbereich der Sensoreinrichtung im Rahmen des maximalen Überlappungsüberstands zu vergrößern, um in der zweiten Anordnung nicht nur das autonome Fahrzeug über den Umfang einzuschließen, sondern auch das aufgenommene Transportgestell.

Jeweils mindestens ein starrer Kontaktkörper kann an jeweils einem zweiten Glied der Gelenkanordnung angeordnet sein und jedes zweite Glied kann mittels Gelenken und ersten Gliedern der Gelenkanordnung aus der ersten Anordnung in die zweite Anordnung umpositionierbar gelagert sein, und jedem starren Kontaktkörper kann dabei ein Bewegungssensor, wie beispielsweise einen Mikroschalter zugeordnet sein, der ausgebildet ist, eine Bewegung des jeweiligen Kontaktkörpers zu erfassen, wenn ein Hindernis gegen die jeweilige Außenoberfläche des starren Kontaktkörpers stößt.

Alternativ zu starren Kontaktkörpern kann die Sensoreinrichtung wenigstens ein Zugmittel aufweisen, das mittels Umlenkvorrichtungen um das autonome Fahrzeug und/oder das aufgenommene Transportgestell umlaufend gelagert ist, wobei das Zugmittel eine Umfangsgrenzlinie des Erfassungsbereichs der Sensoreinrichtung bildet, und die Umlenkvorrichtungen mittels der Gelenkanordnung aus der ersten Anordnung in die zweite Anordnung umpositionierbar gelagert sind. In einem solchen Fall kann die Gelenkanordnung beispielsweise ausgebildet sein, ausgehend von der ersten Anordnung das Zugmittel in die zweite Anordnung zu bewegen, indem die Gelenkanordnung das Zugmittel beispielsweise unter den vom Boden abgehobenen Standbeinen des von dem autonomen Fahrzeug aufgenommenen Transportgestells nach außen hindurchbewegt.

Das Zugmittel hat den Vorteil, dass damit eine sehr flach bauende Sensoreinrichtung geschaffen werden kann. Das Zugmittel kann mit wenigen und einfachen Schienen und/oder Rollen geführt werden.

Das Zugmittel kann eine Verbindung mit der Auswertevorrichtung aufweisen, derart, dass das Zugmittel mittels der Umlenkvorrichtungen, die an der Gelenkanordnung, insbesondere an wenigstens einem zweiten Glied der Gelenkanordnung gelagert sein können, um die Grundkontur und/oder die Gesamtkontur des Fahrzeugkörpers herumgeführt ist. Mindestens ein Endabschnitt des Zugmittels kann an einen Aufnehmer angeschlossen sein, der ausgebildet ist, eine Zugkraft bzw. eine Zugbewegung des Zugmittels zu erfassen und in Abhängigkeit der erfassten Zugkraft oder Zugbewegung ein die Zugkraft oder Zugbewegung kennzeichnendes Signal zu erzeugen.

Das Zugmittel kann ergänzend oder ersetzend fest in Position gehalten werden, sodass ein Kontakt mit diesem eine Positionsänderung und/oder Spannungsänderung in der Gelenkanordnung zur Folge hätte.

Das Zugmittel kann beispielsweise als eine Schnur oder Draht ausgebildet sein. Das Zugmittel kann ausgebildet sein, bei einem seitlichen Kontakt eines Hindernissen mit dem Zugmittel eine Längenänderung, Positionsänderung oder Auslenkungsänderung des Zugmittels zu verursachen, welche die Zugkraft oder Zugbewegung bewirkt und die dann ausgewertet wird. Des Weiteren kann das Zugmittel ausgebildet sein, bei einem Kontakt eine Positionsänderung und/oder Belastungsänderung in der Gelenkanordnung auszulösen die dort wiederum über geeignete Positionssensoren und/oder Spannungssensoren ausgewertet wird.

Der jeweils auslösende physikalische Effekt kann eine Änderung der Zugspannung des Zugmittels sein, eine Änderung der Schnurlänge sein oder eine Änderung am Zugmittelhalter sein. Eine Änderung im Zugmittelhalter kann beispielsweise durch einen Schalter stattfinden, der eine Endposition eines mit dem Zugmittel verbundene Hebels oder Schiebers erfasst. Insoweit kann der Schieber eine lineare Erfassung ermöglichen. Eine Änderung im Zugmittelhalter kann aber auch durch eine Spanungsänderung am Zugmittelhalter erfasst werden.

Jeweils eine einzelne Umlenkvorrichtung kann an jeweils einem zweiten Glied der Gelenkanordnung angeordnet sein und jedes zweite Glied kann mittels Gelenken und ersten Gliedern der Gelenkanordnung aus der ersten Anordnung in die zweite Anordnung umpositionierbar gelagert sein, wodurch das Zugmittel um die Grundumfangskontur und/oder die Gesamtumfangskontur des Fahrzeugkörpers herumgeführt ist, wobei das Zugmittel, insbesondere ein Endabschnitt des Zugmittels, an einen Aufnehmer angeschlossen sein kann, der ausgebildet ist, eine Bewegung des Zugmittels zu erfassen und in Abhängigkeit der erfassten Bewegung ein die Bewegung kennzeichnendes Signal zu erzeugen.

Die Umlenkvorrichtung kann Rollen aufweisen, die an der Gelenkanordnung drehbar gelagert sind.

Die Umlenkvorrichtung ist generell ausgebildet, das Zugmittel um die Grundkontur und/oder die Gesamtkontur des Fahrzeuges herum zu leiten. Dazu kann die Umlenkvorrichtung mehrere, beispielsweise vier an jeweils einem Gelenkarm oder Gelenkteil der Gelenkanordnung drehbar gelagerte Rollen aufweisen, welche das Zugmittel führen und um das autonome Fahrzeug herumlenken. Statt drehbar gelagerter Rollen können gegebenenfalls auch starre, feststehende Führungsrinnen vorgesehen sein, in denen das Zugmittel seitlich geführt und gegen Herausspringen gesicherte ist und über die das Zugmittel innerhalb der Führungsrinnen hinweggeleiten können.

In einer zweiten generellen Ausführungsvariante kann die Sensoreinrichtung als mindestens ein berührungslos arbeitender Sensor ausgebildet sein.

Der berührungslos arbeitende Sensor kann ausgebildet sein, Hindernisse in der unmittelbaren Umgebung des autonomen Fahrzeuges zu detektieren, indem ein überwachter Lichtstrahl der Sensoreinrichtung durch das Hindernis unterbrochen wird.

Die Sensoreinrichtung kann demgemäß eine Lichtschranke umfassen, aufweisend mindestens einen Lichtsender, der ausgebildet ist einen Lichtstrahl auszusenden, mindestens einen Lichtempfänger, der ausgebildet ist den Lichtstrahl zu empfangen, und wenigstens einen Umlenkspiegel und/oder umlenkendes Prisma, der ausgebildet ist den vom Lichtsender ausgesendeten Lichtstrahl um die Grundumfangskontur und/oder die Gesamtumfangskontur des Fahrzeugkörpers herum dem Lichtempfänger zu zuleiten.

Die Lichtschranke weist beispielsweise einen Lichtsender auf, welcher einen Lichtstrahl erzeugt, welcher mit wenigstens einen oder mehreren Umlenkspiegeln und/oder umlenkendes Prisma, insbesondere drei Umlenkspiegel, zu einem Lichtempfänger den Lichtstrahl leitet, welcher ausgebildet ist, den Lichtstrahl zu detektieren.

Der Auslöseeffekt kann dabei nicht nur die Unterbrechung des Lichtstrahls sein, sondern auch eine Verstellung der Umlenkspiegel und/oder der umlenkenden Prisma.

Der Umlenkspiegel ist ausgebildet einen Lichtstrahl umzuleiten. Dazu weist der Umlenkspiegel eine den Lichtstrahl reflektierende Oberfläche auf, welche in der Position und Ausrichtung mithilfe der Gelenkanordnung verändert werden kann.

Das umlenkende Prisma ist ausgebildet einen Lichtstrahl umzuleiten. Dazu weist Das umlenkende Prisma eine den Lichtstrahl brechende Oberfläche auf, welche in der Position und Ausrichtung mithilfe der Gelenkanordnung verändert werden kann.

Der Lichtsender ist ausgebildet einen Lichtstrahl zu erzeugen. Der Lichtsender kann beispielsweise eine Laserdiode sein.

Der Lichtempfänger ist ausgebildet den Lichtstrahl zu detektieren, derart, dass der Lichtempfänger wenigstens zwei Signale erzeugen kann, einerseits für ein Detektieren des Empfangens eines Lichtstrahls und für das Detektieren des Fehlens eines Lichtstrahls.

Es zeigt:
- Fig. 1: eine perspektivische Darstellung eines beispielhaften autonomen Fahrzeuges mit einem aufgenommenen Transportgestell;
- Fig. 2: eine schematische Darstellung des autonomen Fahrzeuges mit einer Gelenkanordnung und einer ersten Ausführungsform einer Sensoreinrichtung mit starren Kontaktkörpern;
- Fig. 3: eine schematische Darstellung des autonomen Fahrzeuges mit einer Gelenkanordnung und einer zweiten Ausführungsform einer Sensoreinrichtung mit einem Zugmittel;
- Fig. 4: eine schematische Darstellung des autonomen Fahrzeuges mit einer Gelenkanordnung und einer dritten Ausführungsform einer Sensoreinrichtung mit Lichtschranke.

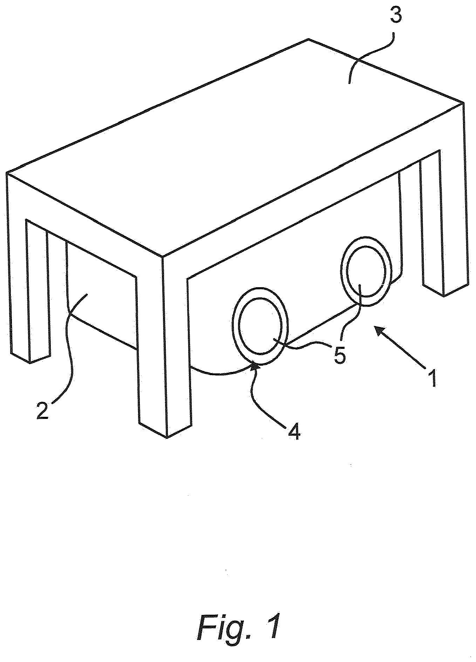

Die Fig. 1 zeigt ein schematisch dargestelltes autonomes Fahrzeug 1, aufweisend einen Fahrzeugkörper 2, welcher ausgebildet ist, ein Transportgestell 3 aufzunehmen. Der Fahrzeugkörper 2 weist ein Fahrwerk 4 mit Rädern 5 auf. Die Räder 5 können Omnidirektionalräder, insbesondere Mecanumräder sein.

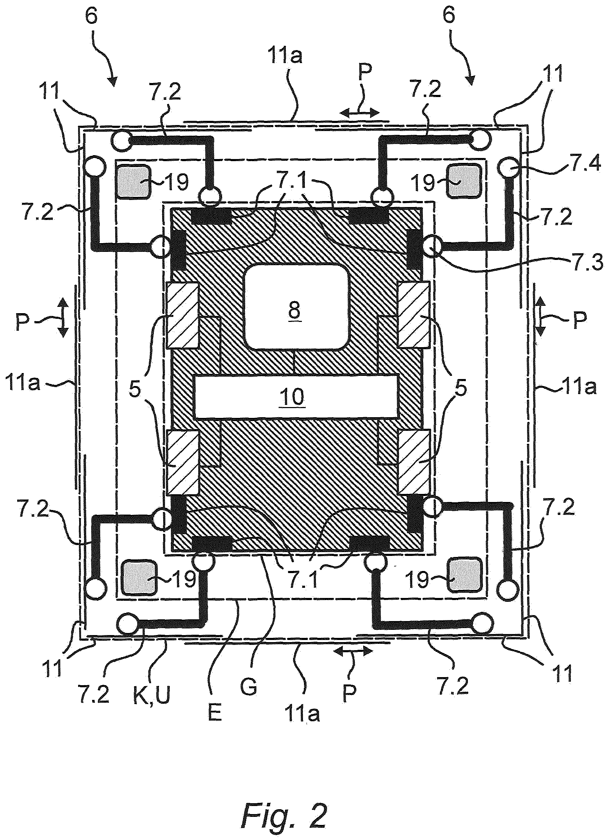

Die Fig. 2, 3 und 4 zeigen jeweils einen Aufbau eines autonomen Fahrzeuges 1 in einem horizontalen Querschnitt mit einer jeweiligen Sensoreinrichtung 6, welche in den jeweiligen Figuren in unterschiedlichen beispielhaften Ausführungsformen dargestellt ist. Die Sensoreinrichtung 6 weist im Allgemeinen einen Erfassungsbereich zur Erkennung von Hindernissen in der unmittelbaren Umgebung des autonomen Fahrzeuges 1 auf. Das autonome Fahrzeug 1 weist außerdem generell eine jeweils entsprechende Gelenkanordnung 7 auf, welche ausgebildet ist, die Sensoreinrichtung 6 in Bezug zum Fahrzeugkörper 2 zu verstellen, derart, dass die Sensoreinrichtung 6 wahlweise
- in einer die Grundkontur G des Fahrzeugkörpers 2 überwachenden ersten Anordnung betreibbar ist oder
- in wenigstens einer eine Gesamtkontur K bestehend aus der Grundkontur G und einer sich bei aufgenommenen Transportgestell 3 ergebenden Erweiterungskontur E des autonomen Fahrzeugs 1 überwachenden zweiten Anordnung betreibbar ist,
in welcher zweiten Anordnung die Sensoreinrichtung 6 gegenüber der ersten Anordnung so umpositioniert ist, dass ein von dem autonomen Fahrzeug 1 aufgenommenes Transportgestell 3 von dem die Gesamtumfangskontur in der zweiten Anordnung vollständig umschließenden, nach außen detektierenden Erfassungsbereich B der Sensoreinrichtung 6 eingeschlossen ist.

Die Gelenkanordnung 7 kann mehrfach vorhanden sein. So kann die Gelenkanordnung 7 im Falle der dargestellten Ausführungsbeispiele insbesondere vierfach vorhanden sein, insbesondere derart, dass in jedem Eckbereich des autonomen Fahrzeugs 1 eine einzelne Gelenkanordnung 7 angeordnet ist. Jede einzelne Gelenkanordnung 7 weist wenigstens zwei Glieder 7.1 und 7.2 und wenigstens ein Gelenk 7.3, insbesondere auch zwei Gelenke 7.3, 7.4 auf. Ein erstes Glied 7.1 ist im Falle der vorliegenden Ausführungsbeispiele mit dem autonomen Fahrzeug 1 verbunden, insbesondere an diesem ausgebildet, und an dem zweiten Glied 7.2 ist eine Sensoreinrichtung 6 angebracht. Das Gelenk 7.3 und/oder das Gelenk 7.4 verbindet das erste Glied 7.1 mit dem zweiten Glied 7.2 bzw. mit der Sensoreinrichtung 6 und ermöglicht dadurch die Verstellbarkeit der Sensoreinrichtungen 6.

Die Position für die zweite Anordnung kann durch Verstellen der Gelenkanordnungen 7 eingenommen werden. In der zweiten Anordnung sind die Sensoreinheiten 6 derart verstellt, dass ein Transportgestell 3, das größer als die Grundkontur G des Fahrzeugkörpers 2 ist, sich innerhalb des Schutzbereichs der Sensoreinheiten 6 befindet. Dazu werden die Sensoreinheiten 6 so umpositioniert, dass beispielsweise Standbeine 19 des Transportgestells 3 im Inneren des von den Sensoreinrichtungen 6 überwachten Bereichs liegen, d.h. der Erfassungsbereich B der Sensoreinrichtungen 6 nach außen gerichtet ist und das Transportgestell 3, beispielsweise auch dessen Standbeine 19, in einem inneren, nicht überwachten Bereich liegt, wenn sich die Sensoreinheiten 6 in der zweiten Anordnung befinden.

Das autonome Fahrzeug 1 weist im Falle der vorliegenden Ausführungsbeispiele eine Auswertevorrichtung 8 auf, welche sich an dem Fahrzeug befindet. An die Auswertevorrichtung 8 ist die Sensoreinrichtung 6 bzw. sind die mehreren Sensoreinrichtungen 6 angeschlossen, derart, dass Sensorsignale der Sensoreinrichtungen 6 zu Ihrer Auswertung an die Auswertevorrichtung 8 geleitet werden können.

Das autonome Fahrzeug 1 weist außerdem in allen Ausführungsformen eine Steuereinheit 10 auf, welche ausgebildet ist, die Räder 5 des autonomen Fahrzeugs 1 anzusteuern, um das autonome Fahrzeug 1 in einer Umgebung automatisch fahren und/oder automatisch navigieren zu können.

Die Steuereinheit 10 ist außerdem ausgebildet, Signale der Auswertevorrichtung 8 zu verarbeitet. In Abhängigkeit der Zustände der Sensoreinrichtungen 6 und/oder der Gelenkanordnungen 7 kann die Auswertevorrichtung 8 feststellen, an welcher Stelle oder an welchen Stellen eine Kollision auftritt. In Abhängigkeit des Vorliegens oder Nichtvorliegens einer Kollision und der örtlichen Lagen der detektierten Kollisionsobjekte kann dann die Steuereinheit 10 die Räder 5 entsprechend ansteuern, um das autonome Fahrzeug 1 beispielsweise an dem Hindernis anzuhalten, von dem Hindernis auszuweichen und/oder das Hindernis zu umfahren.

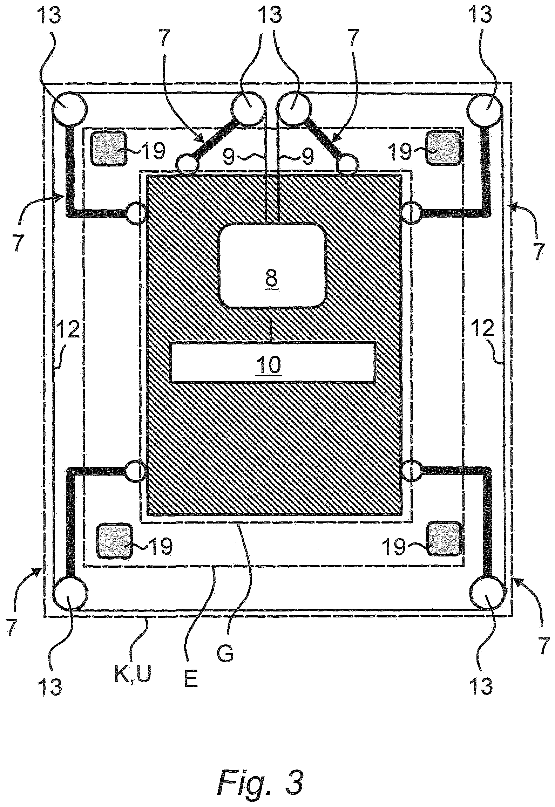

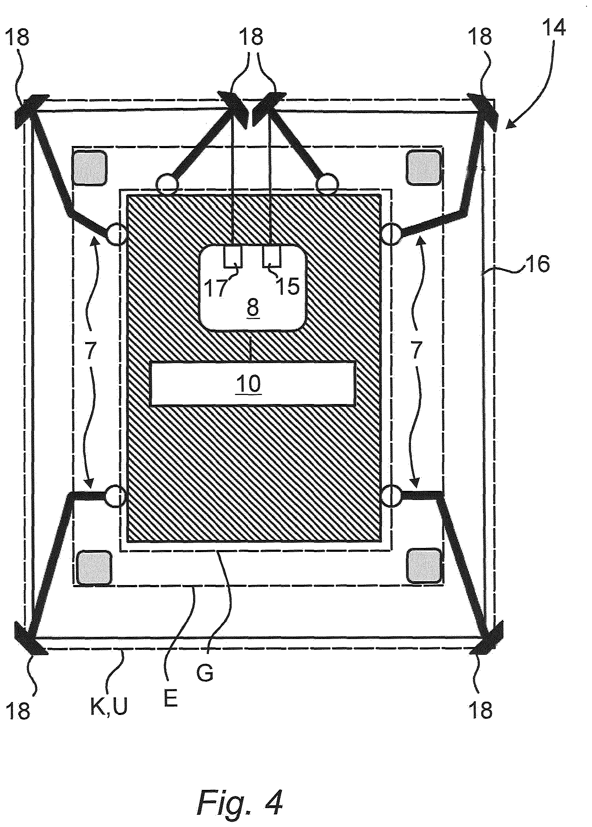

Die Fig. 2 und Fig. 3 zeigen jeweils ein autonomes Fahrzeug 1, das unterschiedlich ausgebildete Sensoreinrichtungen 6 aufweist, welche jedoch beide als ein mechanischer Kontakt-Sensor ausgebildet sind. Die Fig. 4 zeigt hingegen ein Ausführungsbeispiel, das mit einem optischen Sensor ausgebildet ist.

Die Fig. 2 zeigt das autonome Fahrzeug 1, das eine Sensoreinrichtung 6 aufweist, welche Kontaktkörper 11 aufweist, die an den jeweiligen Gelenkanordnungen 7 gelagert sind. Der jeweilige Kontaktkörper 11 weist eine Außenoberfläche auf, welche die Annäherung oder Berührung mit Hindernissen detektiert, wobei bei einer Berührung des Kontaktkörpers 11 mit einem Hindernis ein entsprechendes Signal erzeugt wird, welches sodann von der Auswertevorrichtung 8 ausgewertet wird und wobei anschließend die Steuereinheit 10 in Abhängigkeit der Auswertung die Räder entsprechend ansteuert.

In der zweiten Anordnung sind demgemäß die Kontaktkörper 11 derart verstellt, dass ein Transportgestell 3, das größer als die Grundkontur G des Fahrzeugkörpers 2 ist, sich innerhalb des Schutzbereichs der Kontaktkörper 11 befindet. Dazu werden die Kontaktkörper 11 so umpositioniert, dass beispielsweise Standbeine 19 des Transportgestells 3 im Inneren des von den Kontaktkörpern 11 überwachten Bereichs liegen, d.h. der Erfassungsbereich B der Kontaktkörper 11 nach außen gerichtet ist und das Transportgestell 3, beispielsweise auch dessen Standbeine 19, in einem inneren, nicht überwachten Bereich liegt, wenn sich die Kontaktkörper 11 in der zweiten Anordnung befinden. Die Kontaktkörper 11 können so zusammenwirken, dass sie eine über das gesamte autonome Fahrzeug 1 umlaufende Barriere bilden. Zwei benachbarte Kontaktkörper 11 können sich dabei zumindest teilweise überlappen. An ein oder mehreren Kontaktkörpern 11 können weitere Hilfskontaktkörper 11a beispielsweise in Pfeilrichtung P verstellbar gelagert sein.

Die Fig. 3 zeigt das autonome Fahrzeug 1, das eine Sensoreinrichtung 6 aufweist, welche ein Zugmittel 12 umfasst, wobei die Endabschnitte 9 des Zugmittels 12 mit der Auswertevorrichtung 8 verbunden sind, derart, dass das Zugmittel 12 zunächst mittels Umlenkvorrichtungen 13 um das autonome Fahrzeug 1 und das aufgenommene Transportgestell 3 bzw. dessen Standbeine 19 umlaufend positioniert ist, wobei das Zugmittel 12 die Umfangsgrenzlinie U des Erfassungsbereichs B der Sensoreinrichtung 6 bildet, und die Umlenkvorrichtungen 13 mittels der Gelenkanordnungen 7 aus der ersten Anordnung in die zweite Anordnung umpositionierbar sind, um das Zugmittel 12 in der ersten Anordnung auf einem kleineren Umfang um das autonome Fahrzeug 1 herum zu lagern und in der zweiten Anordnung auf einem größeren Umfang um das autonome Fahrzeug 1 herum zu lagern.

Die Umlenkvorrichtung 13 kann beispielsweise mit Rollen ausgebildet sein, welche an der Gelenkanordnung 7 gelagert sind, insbesondere an dem zweiten Glied 7.2 der Gelenkanordnung 7.

Die Fig. 4 zeigt eine weitere Ausführungsform des autonomen Fahrzeugs 1, das eine Sensoreinrichtung 6 aufweist, welche als mindestens ein berührungslos arbeitender Sensor ausgebildet ist.

Die berührungslos arbeitende Sensoreinrichtung 6 gemäß Fig. 4 umfasst eine Lichtschranke 14, aufweisend mindestens einen Lichtsender 15, der ausgebildet ist, einen Lichtstrahl 16 auszusenden, mindestens einen Lichtempfänger 17, der ausgebildet ist, den Lichtstrahl 16 zu empfangen, und im Falle des vorliegenden Ausführungsbeispiel insgesamt sechs Umlenkspiegel 18, die ausgebildet sein, den vom Lichtsender 15 ausgesendeten Lichtstrahl 16 um die Grundumfangskontur G und/oder die Gesamtumfangskontur K des Fahrzeugkörpers 2 herum dem Lichtempfänger 17 zu zuleiten.

In der zweiten Anordnung sind demgemäß die Umlenkspiegel 18 derart verstellt, dass ein Transportgestell 3, das größer als die Grundkontur G des Fahrzeugkörpers 2 ist, sich innerhalb des Schutzbereichs des Lichtstrahls 16 befindet. Dazu werden die Umlenkspiegel 18 so umpositioniert, dass beispielsweise Standbeine 19 des Transportgestells 3 im Inneren des von dem Lichtstrahl 16 überwachten Bereichs liegen, d.h. der Erfassungsbereich B des Lichtstrahls 16 um das Transportgestell 3 herumläuft und somit auch dessen Standbeine 19 umfängt, wenn sich die Umlenkspiegel 18 in der zweiten Anordnung befinden.

## Patentansprüche

1. Autonomes Fahrzeug (1), aufweisend einen Fahrzeugkörper (2) mit einer Aufnahmeeinrichtung, die ausgebildet ist, ein Transportobjekt (3) auf dem Fahrzeugkörper (2) aufzunehmen, ein Fahrwerk (4) mit wenigstens einem angetriebenen Rad (5) und mindestens einer Sensoreinrichtung (6), welche einen das autonome Fahrzeug (1) umschließenden Erfassungsbereich aufweist zur Erkennung von Hindernissen, die in der unmittelbaren Umgebung des autonomen Fahrzeuges (1) in den Erfassungsbereich der Sensoreinrichtung (6) eintreten, **dadurch gekennzeichnet, dass** das autonome Fahrzeug (1) eine Gelenkanordnung (7) aufweist, welche ausgebildet ist die Sensoreinrichtung (6) in Bezug zum Fahrzeugkörper (2) zu verstellen, derart, dass die Sensoreinrichtung (6) wahlweise
- in einer die Grundumfangskontur (G) des Fahrzeugkörpers (2) überwachenden ersten Anordnung betreibbar ist und
- in wenigstens einer eine Gesamtumfangskontur (K) bestehend aus der Grundumfangskontur (G) und einer sich bei aufgenommenem Transportobjekt (3) ergebenden Erweiterungskontur (E) des autonomen Fahrzeugs (1) überwachenden zweiten Anordnung betreibbar ist,
in welcher zweiten Anordnung die Sensoreinrichtung (6) gegenüber der ersten Anordnung so umpositioniert ist, dass ein von dem autonomen Fahrzeug (1) aufgenommenes Transportobjekt (3) von dem die Gesamtumfangskontur (K) in der zweiten Anordnung vollständig umschließenden, nach außen detektierenden Erfassungsbereich (B) der Sensoreinrichtung (6) eingeschlossen ist.

2. Autonomes Fahrzeug (1) nach Anspruch 1, **dadurch gekennzeichnet, dass** die Gelenkanordnung (7) wenigstens zwei Glieder (7.1 und 7.2) und wenigstens ein Gelenk (7.3) aufweist, wobei ein erstes Glied (7.1) mit dem Fahrzeug verbunden ist, ein zweites Glied (7.2) die Sensoreinrichtung (6) aufweist und das Gelenk (7.3) das erste Glied (7.1) mit dem zweiten Glied (7.2) verstellbar verbindet.

3. Autonomes Fahrzeug (1) nach Anspruch 1 und 2, **dadurch gekennzeichnet, dass** das autonome Fahrzeug (1) eine Auswertevorrichtung (8) aufweist, welche ausgebildet ist Signale der Sensoreinrichtung (6) auszuwerten, derart, dass ein Eindringen eines Hindernisses in den das autonome Fahrzeug (1) und das aufgenommene Transportgestell (3) umschließenden Erfassungsbereichs (B) während einer Fahrt des autonomen Fahrzeugs (1) erkannt wird.

4. Autonomes Fahrzeug (1) nach Anspruch 3, **dadurch gekennzeichnet, dass** die Sensoreinrichtung (6) ausgebildet ist und die Auswertevorrichtung (8) eingerichtet ist, eine durch die Sensoreinrichtung (6) aufgespannte, um das autonome Fahrzeug (1) und das aufgenommene Transportobjekt (3) umlaufende Umfangsgrenzlinie (U) und/oder einen umgebenden Umfangsfeldbereich auf Eindringen eines Hindernisses zu überwachen.

5. Autonomes Fahrzeug (1) nach Anspruch 1 bis 4, **dadurch gekennzeichnet, dass** das autonome Fahrzeug (1) eine Steuereinheit (10) aufweist, welche eingerichtet ist, das wenigstens eine angetriebene Rad (5) in Abhängigkeit des Eindringens eines Hindernisses in den Erfassungsbereich (B) der Sensoreinrichtung (6) anzusteuern.

6. Autonomes Fahrzeug (1) nach Anspruch 1 bis 5, **dadurch gekennzeichnet, dass** die Sensoreinrichtung (6) als mindestens ein um das autonome Fahrzeug (1) und/oder das aufgenommene Transportobjekt (3) umlaufender Kontakt-Sensor ausgebildet ist.

7. Autonomes Fahrzeug (1) nach Anspruch 6, **dadurch gekennzeichnet, dass** die Sensoreinrichtung (6) wenigstens einen starren Kontaktkörper (11) aufweist, welcher eine Außenoberfläche umfasst, die zum berührenden Detektieren von Hindernissen im Fahrweg des autonomen Fahrzeugs (1) ausgebildet ist.

8. Autonomes Fahrzeug (1) nach Anspruch 7, **dadurch gekennzeichnet, dass** jeweils mindestens ein starrer Kontaktkörper (11) an jeweils einem zweiten Glied (7.2) der Gelenkanordnung (7) angeordnet ist und jedes zweite Glied (7.2) mittels Gelenken (7.3) und ersten Gliedern (7.1) der Gelenkanordnung (7) aus der ersten Anordnung in die zweite Anordnung umpositionierbar gelagert sind, und jedem starren Kontaktkörper (11) ein Bewegungssensor zugeordnet ist, der ausgebildet ist eine Bewegung des jeweiligen Kontaktkörpers (11) zu erfassen, wenn ein Hindernis gegen die jeweilige Außenoberfläche des starren Kontaktkörpers (11) stößt.

9. Autonomes Fahrzeug (1) nach Anspruch 6, **dadurch gekennzeichnet, dass** die Sensoreinrichtung (6) ein Zugmittel (12) aufweist, das mittels Umlenkvorrichtungen (13) um das autonome Fahrzeug (1) und/oder das aufgenommene Transportgestell (3) umlaufend gelagert ist, wobei das Zugmittel (12) eine Umfangsgrenzlinie (U) des Erfassungsbereichs (B) der Sensoreinrichtung (6) bildet, und die Umlenkvorrichtungen (13) mittels der Gelenkanordnung (7) aus der ersten Anordnung in die zweite Anordnung umpositionierbar gelagert sind.

10. Autonomes Fahrzeug (1) nach Anspruch 9, **dadurch gekennzeichnet, dass** jeweils eine einzelne Umlenkvorrichtung (13) an jeweils einem zweiten Glied (7.2) der Gelenkanordnung (7) angeordnet ist und jedes zweite Glied (7.2) mittels Gelenken (7.3) und ersten Gliedern (7.1) der Gelenkanordnung (7) aus der ersten Anordnung in die zweite Anordnung umpositionierbar gelagert sind, wodurch das Zugmittel (12) um die Grundumfangskontur und/oder die Gesamtumfangskontur des Fahrzeugkörpers (2) herumgeführt ist, wobei das Zugmittel (12), insbesondere ein Endabschnitt des Zugmittels (12) an einen Aufnehmer angeschlossen ist, der ausgebildet ist, eine Bewegung des Zugmittels (12) zu erfassen und in Abhängigkeit der erfassten Bewegung ein die Bewegung kennzeichnendes Signal zu erzeugen.

11. Autonomes Fahrzeug (1) nach Anspruch 9 oder 10, **dadurch gekennzeichnet, dass** die Umlenkvorrichtung (13) Rollen aufweist, die an der Gelenkanordnung (7) drehbar gelagert sind.

12. Autonomes Fahrzeug (1) nach Anspruch 1 bis 5, **dadurch gekennzeichnet, dass** die Sensoreinrichtung (6) als mindestens ein berührungslos arbeitender Sensor ausgebildet ist.

13. Autonomes Fahrzeug (1) nach Anspruch 12, **dadurch gekennzeichnet, dass** die Sensoreinrichtung (6) eine Lichtschranke (14) umfasst, aufweisend mindestens einen Lichtsender (15), der ausgebildet ist einen Lichtstrahl (16) auszusenden, mindestens einen Lichtempfänger (17), der ausgebildet ist den Lichtstrahl zu empfangen, und wenigstens einen Umlenkspiegel (18) oder ein umlenkendes Prisma, der ausgebildet ist den vom Lichtsender (15) ausgesendeten Lichtstrahl (16) um die Grundumfangskontur (G) und/oder die Gesamtumfangskontur (K) des Fahrzeugkörpers (2) herum dem Lichtempfänger (17) zu zuleiten.

## Claims

1. Autonomous vehicle (1), having a vehicle body (2) with a receiving device which is designed to receive an object to be transported (3) on the vehicle body (2), a chassis (4) with at least one driven wheel (5) and with at least one sensor device (6) which has a detection region surrounding the autonomous vehicle (1) for identifying obstacles which enter the detection region of the sensor device (6) in the immediate vicinity of the autonomous vehicle (1), **characterized in that** the autonomous vehicle (1) has a joint arrangement (7) which is designed to adjust the sensor device (6) with respect to the vehicle body (2) in such a manner that the sensor device (6) selectively
- can be operated in a first arrangement monitoring the basic circumferential contour (G) of the vehicle body (2) and
- can be operated in at least one second arrangement monitoring an overall circumferential contour (K), consisting of the basic circumferential contour (G) and an expansion contour (E) of the autonomous vehicle (1) arising when an object to be transported (3) is received, in which second arrangement the sensor device (6) is repositioned in relation to the first arrangement in such a manner that an object to be transported (3), which is received by the autonomous vehicle (1), is enclosed by the outwardly detecting detection region (B) of the sensor device (6), said detection region completely surrounding the overall circumferential contour (K) in the second arrangement.

2. Autonomous vehicle (1) according to Claim 1, **characterized in that** the joint arrangement (7) has at least two limbs (7.1 and 7.2) and at least one joint (7.3), wherein a first limb (7.1) is connected to the vehicle, a second limb (7.2) has the sensor device (6), and the joint (7.3) connects the first limb (7.1) adjustably to the second limb (7.2).

3. Autonomous vehicle (1) according to Claims 1 and 2, **characterized in that** the autonomous vehicle (1) has an evaluation device (8) which is designed to evaluate signals of the sensor device (6) in such a manner that penetration of an obstacle into the detection region (B) surrounding the autonomous vehicle (1) and the received object to be transported (3) while the autonomous vehicle (1) is in motion is identified.

4. Autonomous vehicle (1) according to Claim 3, **characterized in that** the sensor device (6) is designed and the evaluation device (8) is configured to monitor a circumferential boundary line (U) spanned by the sensor device (6) and encircling the autonomous vehicle (1) and the received object to be transported (3) and/or a surrounding circumferential field region for penetration of an obstacle.

5. Autonomous vehicle (1) according to Claims 1 to 4, **characterized in that** the autonomous vehicle (1) has a control unit (10) which is configured to activate the at least one driven wheel (5) depending on the penetration of an obstacle into the detection region (B) of the sensor device (6).

6. Autonomous vehicle (1) according to Claims 1 to 5, **characterized in that** the sensor device (6) is designed as at least one contact sensor encircling the autonomous vehicle (1) and/or the received object to be transported (3) .

7. Autonomous vehicle (1) according to Claim 6, **characterized in that** the sensor device (6) has at least one rigid contact body (11) which comprises an outer surface which is designed for contact detection of obstacles in the travel path of the autonomous vehicle (1) .

8. Autonomous vehicle (1) according to Claim 7, **characterized in that** in each case at least one rigid contact body (11) is arranged on in each case one second limb (7.2) of the joint arrangement (7), and each second limb (7.2) is mounted such that it can be repositioned from the first arrangement into the second arrangement by means of joints (7.3) and first limbs (7.1) of the joint arrangement (7), and each rigid contact body (11) is assigned a motion sensor which is designed to detect a movement of the respective contact body (11) if an obstacle strikes against the respective outer surface of the rigid contact body (11).

9. Autonomous vehicle (1) according to Claim 6, **characterized in that** the sensor device (6) has a traction means (12) which is mounted by means of deflecting devices (13) so as to encircle the autonomous vehicle (1) and/or the received object to be transported (3), wherein the traction means (12) forms a circumferential boundary line (U) of the detection region (B) of the sensor device (6), and the deflecting devices (13) are mounted by means of the joint arrangement (7) such that they can be repositioned from the first arrangement into the second arrangement.

10. Autonomous vehicle (1) according to Claim 9, **characterized in that** in each case an individual deflecting device (13) is arranged on in each case one second limb (7.2). of the joint arrangement (7), and each second limb (7.2) is mounted by means of joints (7.3) and first limbs (7.1) of the joint arrangement (7) such that it can be repositioned from the first arrangement into the second arrangement, as a result of which the traction means (12) is guided around the basic circumferential contour and/or the overall circumferential contour of the vehicle body (2), wherein the traction means (12), in particular an end portion of the traction means (12), is connected to a sensing element which is designed to detect a movement of the traction means (12) and, depending on the detected movement, to produce a signal indicating the movement.

11. Autonomous vehicle (1) according to Claim 9 or 10, **characterized in that** the deflecting device (13) has rollers which are mounted rotatably on the joint arrangement (7).

12. Autonomous vehicle (1) according to Claims 1 to 5, **characterized in that** the sensor device (6) is designed as at least one contactlessly operating sensor.

13. Autonomous vehicle (1) according to Claim 12, **characterized in that** the sensor device (6) comprises a light barrier (14) having at least one light transmitter (15), which is designed to emit a light beam (16), at least one light receiver (17), which is designed to receive the light beam, and at least one deflecting mirror (18) or a deflecting prism, which is designed to conduct the light beam (16) emitted by the light transmitter (15) around the basic circumferential contour (G) and/or the overall circumferential contour (K) of the vehicle body (2) to the light receiver (17).

## Revendications

1. Véhicule autonome (1), présentant un corps de véhicule (2) pourvu d'un dispositif de prise en charge qui est réalisé pour prendre en charge un objet transporté (3) sur le corps de véhicule (2), un châssis (4) pourvu d'au moins une roue entraînée (5) et d'au moins un dispositif capteur (6) qui présente une zone de détection entourant le véhicule autonome (1) pour identifier des obstacles qui entrent dans la zone de détection du dispositif capteur (6) dans l'environnement immédiat du véhicule autonome (1), **caractérisé en ce que** le véhicule autonome (1) présente un agencement articulé (7) qui est réalisé pour ajuster le dispositif capteur (6) par rapport au corps de véhicule (2) de telle sorte que le dispositif capteur (6) peut au choix fonctionner
- dans un premier agencement surveillant le contour circonférentiel de base (G) du corps de véhicule (2), et
- dans au moins un deuxième agencement surveillant un contour circonférentiel total (K), composé du contour circonférentiel de base (G) et d'un contour étendu (E) du véhicule autonome (1) résultant lorsqu'un objet transporté (3) est pris en charge,
dans lequel deuxième agencement le dispositif capteur (6) est repositionné par rapport au premier agencement de telle sorte qu'un objet transporté (3) pris en charge par le véhicule autonome (1) est compris dans la zone de détection (B) du dispositif capteur (6), entourant complètement le contour circonférentiel total (K) dans le deuxième agencement et détectant vers l'extérieur.

2. Véhicule autonome (1) selon la revendication 1, **caractérisé en ce que** l'agencement articulé (7) présente au moins deux éléments (7.1 et 7.2) et au moins une articulation (7.3), un premier élément (7.1) étant relié au véhicule, un deuxième élément (7.2) présentant le dispositif capteur (6), et l'articulation (7.3) reliant le premier élément (7.1) au deuxième élément (7.2) de manière réglable.

3. Véhicule autonome (1) selon les revendications 1 et 2, **caractérisé en ce que** le véhicule autonome (1) présente un dispositif d'évaluation (8) qui est réalisé pour évaluer des signaux du dispositif capteur (6) de telle sorte que l'entrée d'un obstacle dans la zone de détection (B) entourant le véhicule autonome (1) et le châssis de transport pris en charge (3) est identifiée pendant un déplacement du véhicule autonome (1).

4. Véhicule autonome (1) selon la revendication 3, **caractérisé en ce que** le dispositif capteur (6) est réalisé et le dispositif d'évaluation (8) est conçu pour surveiller quant à l'entrée d'un obstacle une ligne de démarcation circonférentielle (U) définie par le dispositif capteur (6) et passant autour du véhicule autonome (1) et l'objet transporté pris en charge (3), et/ou une zone environnante d'entourage.

5. Véhicule autonome (1) selon les revendications 1 à 4, **caractérisé en ce que** le véhicule autonome (1) présente une unité de commande (10) qui est conçue pour piloter ladite au moins une roue entraînée (5) en fonction de l'entrée d'un obstacle dans la zone de détection (B) du dispositif capteur (6).

6. Véhicule autonome (1) selon les revendications 1 à 5, **caractérisé en ce que** le dispositif capteur (6) est réalisé sous la forme d'au moins un capteur de contact passant autour du véhicule autonome (1) et/ou l'objet transporté pris en charge (3).

7. Véhicule autonome (1) selon la revendication 6, **caractérisé en ce que** le dispositif capteur (6) présente au moins un corps de contact rigide (11) qui comprend une surface extérieure qui est réalisée pour la détection par contact d'obstacles sur le trajet du véhicule autonome (1).

8. Véhicule autonome (1) selon la revendication 7, **caractérisé en ce que** respectivement au moins un corps de contact rigide (11) est disposé au niveau respectivement d'un deuxième élément (7.2) de l'agencement articulé (7), et chaque deuxième élément (7.2) est monté de manière à pouvoir être repositionné du premier agencement en deuxième agencement au moyen des articulations (7.3) et des premiers éléments (7.1) de l'agencement articulé (7), et à chaque corps de contact rigide (11) est associé un capteur de mouvement qui est réalisé pour détecter un mouvement du corps de contact (11) respectif si un obstacle heurte la surface extérieure respective du corps de contact rigide (11).

9. Véhicule autonome (1) selon la revendication 6, **caractérisé en ce que** le dispositif capteur (6) présente un moyen de traction (12) qui est monté au moyen de dispositifs de renvoi (13) de manière à entourer le véhicule autonome (1) et/ou le châssis de transport pris en charge (3), dans lequel le moyen de traction (12) constitue une ligne de démarcation circonférentielle (U) de la zone de détection (B) du dispositif capteur (6), et les dispositifs de renvoi (13) sont montés de manière à pouvoir être repositionnés du premier agencement en deuxième agencement au moyen de l'agencement articulé (7).

10. Véhicule autonome (1) selon la revendication 9, **caractérisé en ce que** respectivement un dispositif de renvoi (13) individuel est disposé au niveau d'un deuxième élément (7.2) de l'agencement articulé (7), et chaque deuxième élément (7.2) est monté de manière à pouvoir être repositionné du premier agencement en deuxième agencement au moyen des articulations (7.3) et des premiers éléments (7.1) de l'agencement articulé (7), de sorte que le moyen de traction (12) est guidé autour du contour circonférentiel de base et/ou du contour circonférentiel total du corps de véhicule (2), dans lequel le moyen de traction (12), en particulier une section d'extrémité du moyen de traction (12), est connecté à un détecteur qui est réalisé pour détecter un mouvement du moyen de traction (12) et pour générer en fonction du mouvement détecté un signal identifiant le mouvement.

11. Véhicule autonome (1) selon la revendication 9 ou 10, **caractérisé en ce que** le dispositif de renvoi (13) présente des galets qui sont montés rotatifs sur l'agencement articulé (7).

12. Véhicule autonome (1) selon la revendication 1 à 5, **caractérisé en ce que** le dispositif capteur (6) est réalisé sous la forme d'au moins un capteur fonctionnant sans contact.

13. Véhicule autonome (1) selon la revendication 12, **caractérisé en ce que** le dispositif capteur (6) comprend une barrière lumineuse (14), présentant au moins un émetteur de lumière (15) qui est réalisé pour émettre un rayon lumineux (16), au moins un récepteur de lumière (17) qui est réalisé pour recevoir le rayon lumineux, et au moins un miroir de renvoi (18) ou un prisme de renvoi qui est réalisé pour diriger le rayon lumineux (16) émis par l'émetteur de lumière (15) vers le récepteur de lumière (17) en passant autour du contour circonférentiel de base (G) et/ou du contour circonférentiel total (K) du corps de véhicule (2).
